# EUROPÄISCHE PATENTSCHRIFT

(11) **EP 3 337 681 B1**
(45) Veröffentlichungstag und Bekanntmachung des Hinweises auf die Patenterteilung: **30.10.2019**
(21) Anmeldenummer: 16715558.9
(22) Anmeldetag: 12.04.2016
(51) Int. Cl.: B60C 19/00

(54) **FAHRZEUGLUFTREIFEN**
PNEUMATIC TYRE
PNEUMATIQUE

(30) Priorität: 18.08.2015 DE 102015215739
(43) Veröffentlichungstag der Anmeldung: 27.06.2018
(73) Patentinhaber: Continental Reifen Deutschland GmbH, 30165 Hannover (DE)
(72) Erfinder: SCHÜRMANN, Oliver, 30855 Langenhagen (DE)
(74) Vertreter: Finger, Karsten
(86) Internationale Anmeldenummer: PCT/EP2016/057967
(87) Internationale Veröffentlichungsnummer: WO 2017/028964

(56) Entgegenhaltungen:
- EP-A1- 2 660 037
- EP-A2- 2 554 617
- DE-A1-102011 053 686
- JP-A- 2005 104 314

## Beschreibung

Die Erfindung betrifft einen Fahrzeugluftreifen nach dem Oberbegriff des Patentanspruches 1.

Ein Fahrzeugluftreifen der hier betroffenen Art kann sowohl für Zweiräder, als auch für Personenkraftwagen, landwirtschaftliche Fahrzeuge und/oder Lastkraftwagen zum Einsatz kommen, deren Fahrzeugräder mit Fahrzeugluftreifen ausgestattet sind, wobei die Fahrzeugluftreifen eine strukturierte Lauffläche aufweisen, deren Profil in geeigneter Weise an die zu erwartenden Untergründe und Witterungsverhältnisse angepasst ist. Die Lauffläche des Fahrzeugluftreifens geht in an sich bekannter Weise beidseitig in Seitenwände über, deren Ende jeweils durch einen Reifenwulst gebildet wird. Der Reifenwulst dient der luftdichten Fixierung des aus verschiedenen Gummimischungen zusammengesetzten Teils des Fahrzeugluftreifens mit einer Felge des mit dem Fahrzeugluftreifen auszustattenden Fahrzeugrades. Die Felge weist in ebenfalls bekannter Weise korrespondierend zu dem Reifenwulst einen Felgenrand auf, an den sich der Reifenwulst dichtend anlegt, wenn der durch den schlauchlosen Fahrzeugluftreifen und die Felge umschlossene Lufthohlraum mit Druckluft befüllt wird.

Moderne Fahrzeugluftreifen müssen heutzutage nicht nur die vom Kraftfahrzeug erzeugte Bewegungsenergie bei wechselnden Umweltbedingungen jederzeit optimal auf den Untergrund übertragen, sondern auch zunehmend gehobenen Komfortansprüchen entsprechen. Hierbei spielt auch das Abrollgeräusch des Fahrzeugluftreifens eine maßgebliche Rolle, das durch die Vibration der Luft entsteht, wenn diese beim Anpressen des Fahrzeugluftreifens gegen den Straßenbelag komprimiert wird. Das auf diese Weise entstehende Abrollgeräusch wird vom Fahrzeugluftreifen auf die Radnabe übertragen, sodass es letztlich über die Lenkung und die Radaufhängung in den Fahrgastraum gelangt.

Eine akustische Belastung durch das während des Fahrens entstehende Abrollgeräusch wird jedoch nicht nur innerhalb, sondern auch außerhalb des Kraftfahrzeugs als störend empfunden, was beispielsweise in Städten eine zunehmende Bedeutung gewinnt.

Das Abrollgeräusch kann durch eine bereits bekannte und in einigen Kraftfahrzeugen im Einsatz befindliche Technologie maßgeblich reduziert werden. Dabei kommt als schallabsorbierendes Mittel ein in dem Fahrzeugluftreifen angeordneter Absorber zum Einsatz, bei dem es sich beispielsweise um einen Schaumstoffkörper handelt, der stoffschlüssig, also beispielsweise mit einem Kleber, an der Innenseite der Lauffläche des Fahrzeugluftreifens angebracht wird. Bekannt sind auch Lösungen, bei denen der Absorber an der Felge des Fahrzeugrades befestigt ist. Die Struktur eines als Schaumstoffkörper ausgeführten Absorbers, der in der Regel aus Polyurethan besteht, bleibt auch bei extremen Temperaturschwankungen erhalten. Polyurethane sind Kunststoffe oder Kunstharze, die aus der Polyadditionsreaktion von Dialkoholen beziehungsweise Polyolen mit Polyisocyanaten entstehen. In Abhängigkeit von der Art des Kraftfahrzeugs, dessen Geschwindigkeit und der Straßenoberfläche, können durch die zuvor genannten Maßnahmen Reduzierungen der Fahrzeuggeräusche im Innenraum des Kraftfahrzeugs um bis zu 9 dB(A) erreicht werden, wobei durch die Einbringung des Absorbers in den Fahrzeugluftreifen weder die Fahreigenschaften noch die Laufleistung, die Tragfähigkeit oder die mit dem Fahrzeugluftreifen erzielbare Geschwindigkeit eingeschränkt wird.

Ein derartiger Fahrzeugluftreifen eines Fahrzeugrades geht beispielhaft aus der DE 10 2007 028 932 A1 hervor. In der Druckschrift wird beschrieben, dass der Absorber innerhalb des Fahrzeugluftreifens mit einem vorab aufgebrachten, selbsttätig abdichtenden Dichtmittel haftend an der Innenoberfläche des Fahrzeugluftreifens befestigt wird. Als vollflächig verklebtes Dichtmittel kommt hierbei ein Polyurethan-Gel zum Einsatz.

Darüber hinaus ist aus der DE 198 06 953 C2 ein für ein Fahrzeugrad geeigneter Fahrzeugluftreifen sowie ein Verfahren zur Herstellung eines derartigen Fahrzeugluftreifens bekannt, bei dem der Absorber bereits vor dem Aufbringen auf der inneren Oberfläche des Fahrzeugluftreifens in einer hierfür geeigneten Form durch ein Aufschäumverfahren hergestellt und anschließend auf der dem Innenraum des Fahrzeugluftreifens zugewandten Seite mit einer zusätzlichen, schallabsorbierenden Struktur ausgestattet wird. Die auf die Schaumstoffschicht aufgebrachte Struktur kann dabei eine Linienform oder eine Wellenform aufweisen, die jeweils dazu geeignet sind, eine vergrößerte Oberfläche zu schaffen, die zusätzlich schallabsorbierend wirkt.

DE 10 2011 053 686 A1 betrifft einen Fahrzeugluftreifen, bei dem entweder die gesamte Innenoberfläche des Fahrzeugluftreifens mit einem Haftvermittler (Kleber) versehen wird oder lediglich in der Druckschrift beschriebene Grundflächen von auf der Oberfläche eines Absorbers angeordneten Federn mit dem Haftvermittler benetzt, um anschließend die daraus bestehende, massebildende Schicht mit der Seite der Grundflächen an der Innenoberfläche des Fahrzeugluftreifens zu fixieren. Eine ähnliche Lösung geht aus der JP 2005-104314 A hervor, wobei hier das Hauptaugenmerk auf eine verbesserte Wärmeableitung gelegt wird.

Aus der EP 2 554 617 A2 geht darüber hinaus ganz allgemein die Möglichkeit hervor, einen Geräuschdämpfer, der beispielsweise aus einem Polyurethanschaum bestehen kann, mittels eines Klebers (genannt wird hier beispielsweise Silikon) an der Innenoberfläche des Fahrzeugluftreifens zu fixieren. Als Innenoberfläche wird hierbei ein so genannter "inner liner" verwendet.

Schließlich betrifft die EP 2 660 037 A1 einen Geräuschdämpfer, bei dem ein aufschäumbarer Werkstoff auf die Innenoberfläche des Fahrzeugluftreifens aufgebracht wird, indem der Fahrzeugluftreifen in eine Rotationsbewegung versetzt und während der Rotation des Fahrzeugluftreifens über mehrere mit gleichem Abstand zueinander angeordnete Spritzdüsen der aufschäumbare Werkstoff in den Fahrzeugluftreifen eingespritzt wird, um den aufschäumbaren Werkstoff anschließend aufzuschäumen und zu trocknen. Dadurch kann erreicht werden, dass der aufschäumbare Werkstoff einen streifenförmigen Verlauf innerhalb des Fahrzeugluftreifens aufweist und zwischen den einzelnen Streifen des dadurch gebildeten Absorbers Freiräume in Form von Vertiefungen vorhanden sind.

Für die Herstellung einer stoffschlüssigen Verbindung zwischen der Innenoberfläche des Fahrzeugluftreifens und dem Absorber kommen regelmäßig die bereits erwähnten Haftvermittler zum Einsatz, wobei vorwiegend Klebstoffe Verwendung finden. Von Bedeutung ist vorliegend, dass bisher zumeist eine vollflächige Verklebung zwischen Absorber und Innenseite des Fahrzeugluftreifens erfolgt, weil allgemein die Auffassung vertreten wird, dass nur eine vollflächige Verklebung hinreichende Sicherheit gegen ein unerwünschtes, selbsttätiges Ablösen des Absorbers von der Innenoberfläche des Fahrzeugluftreifens gewährleisten könne. Außerdem wurde es als fertigungstechnisch einfachste Lösung betrachtet, die gesamte Innenoberfläche des Fahrzeugluftreifens mit einem Haftvermittler oder Klebstoff zu versehen und anschließend den Absorber an dem hierfür vorgesehenen Abschnitt der Innenoberfläche zu fixieren. Nunmehr konnte jedoch festgestellt werden, dass die vollflächige Verklebung Nachteile hinsichtlich des Gewichts des Fahrzeugluftreifens und damit eine Beeinflussung der Fahreigenschaften eines mit dem Fahrzeugluftreifen ausgestatteten Fahrzeugrades mit sich bringt, auch wenn diese vergleichsweise gering ist. Darüber hinaus ist der Aufwand für die Vorbereitung der Verklebung und hierbei insbesondere der Reinigungsaufwand zur Befreiung der zu verklebenden Oberflächen von Verunreinigungen relativ hoch, so dass hier eine Reduzierung wünschenswert wäre. Eine besondere Schwierigkeit besteht bei der Fertigung eines derartigen Fahrzeugluftreifens darin, dass die Abschnitte mit dem Haftvermittler möglichst genau definierbar sein sollten, um die Eigenschaften des Fahrzeugluftreifens exakt vorherbestimmen zu können.

Der Erfindung liegt die Aufgabe zugrunde, einen Fahrzeugluftreifen mit einem zur Schallabsorption geeigneten Absorber bereitzustellen, bei dem die Verklebung zwischen Absorber und Fahrzeugluftreifen nur in definierten Abschnitten, optimiert und möglichst Gewicht sparend erfolgt und die fertigungstechnisch einfach umsetzbar ist.

Die Erfindung löst diese Aufgabenstellung mit den Merkmalen des Patentanspruches 1. Weitere Ausgestaltungen der Erfindung sind Gegenstand der sich anschließenden Unteransprüche.

Ein Fahrzeugluftreifen, dessen profilierte Lauffläche beidseitig in Seitenwände übergeht, deren Ende durch einen Reifenwulst gebildet wird, der luftdicht in eine Felge eines Fahrzeugrades einsetzbar ist, wobei zur Schallabsorption ein stoffschlüssig mit der Innenoberfläche des Fahrzeugluftreifens verbundener Absorber in den Fahrzeugluftreifen integriert ist und die stoffschlüssige Verbindung aus einem zwischen dem Absorber und der Innenoberfläche des Fahrzeugluftreifens aufgebrachten Haftvermittler besteht, wobei die Innenoberfläche des Fahrzeugluftreifens einander abwechselnd Haftvermittlerabschnitte und haftvermittlerfreie Abschnitte aufweist, wurde erfindungsgemäß dahingehend weiterentwickelt, dass die haftvermittlerfreien Abschnitte mit einem Trennmittel beschichtet sind.

Durch die erfindungsgemäße Lösung, eine nicht vollflächige Verklebung zwischen dem Absorber und der Innenoberfläche des Fahrzeugluftreifens vorzusehen, werden gleich mehrere Vorteile erreicht. So stellt einerseits die Einsparung kostenintensiven Klebstoffes einen wirtschaftlichen Vorzug dar, der darüber hinaus auch zur Reduzierung des Gesamtgewichtes des Fahrzeugluftreifens und damit des mit dem Fahrzeugluftreifen ausgestatteten Fahrzeugrades führt, was sich letztlich auch auf den Kraftstoffverbrauch des Kraftfahrzeugs positiv auswirkt. Darüber hinaus ergeben sich zudem fertigungstechnische Vorteile, weil sowohl die Vorbereitung der zu verbindenden Oberflächen, als auch der Klebevorgang als solcher sich wesentlich vereinfachen, so dass derartig ausgestattete Fahrzeugluftreifen in kürzerer Zeit hergestellt und damit wirtschaftlicher erzeugt werden können. Die Aufteilung in Haftvermittlerabschnitte und haftvermittlerfreie Abschnitte führt zu dem durch das jeweils im Bereich der haftvermittlerfreien Abschnitte aufgebrachte Trennmittel zu einer exakt vorherbestimmbaren Fixierung des Absorbers in dem Fahrzeugluftreifen. Das Trennmittel dient dabei auf einfache Weise der Vermeidung einer haftenden Verbindung zwischen Absorber und Fahrzeugluftreifen in den vorab definierten Abschnitten.

Gemäß einer ersten Ausgestaltung der Erfindung wird vorgeschlagen, dass die haftvermittlerfreien Abschnitte als Trennmittel zwischen der Innenoberfläche des Fahrzeugluftreifens und dem Absorber eine Folie, ein Gewebe oder einen Schmierstoff aufweisen oder daraus bestehen. Maßgeblich für die Auswahl des Trennmittels sind einerseits fertigungstechnische Aspekte. Andererseits ist von Bedeutung, dass im Bereich des Trennmittels ein Untergrund geschaffen werden soll, an dem der Haftvermittler keine stoffschlüssige Verbindung zwischen der Innenoberfläche des Fahrzeugluftreifens und dem Absorber schaffen kann. Anders ausgedrückt verfügt das Trennmittel über eine den Haftvermittler abweisende Oberflächenstruktur.

Darüber hinaus sieht eine Weiterbildung der Erfindung vor, die Haftvermittlerabschnitte und die haftvermittlerfreien Abschnitte entlang des Umfanges der Innenoberfläche des Fahrzeugluftreifens gleichmäßig verteilt zu wiederholen. Mit anderen Worten wird der Haftvermittler in einem immer wiederkehrenden, gleichartigen Muster entweder auf die Innenoberfläche des Fahrzeugluftreifens und/oder auf die Oberfläche des Absorbers aufgetragen. Der gleichmäßige Auftrag des Haftvermittlers und des Trennmittels ermöglicht dabei sogar eine automatisierte Handhabung dieses Vorganges, was wiederum den Fertigungsaufwand für einen auf diese Weise hergestellten Fahrzeugluftreifen reduziert.

Alternativ zu diesem Vorschlag besteht eine andere, sehr vorteilhafte Lösung nach der Erfindung darin, dass die Haftvermittlerabschnitte und die haftvermittlerfreien Abschnitte eine sich entlang des Umfanges der Innenoberfläche des Fahrzeugluftreifens ungleichmäßige, sich ändernde Verteilung aufweisen. Bei dieser Art der Aufbringung des Haftvermittlers beziehungsweise des Trennmittels wird kein bestimmtes Muster oder keine bestimmte Reihenfolge der Aufbringung auf die Innenoberfläche des Fahrzeugluftreifens und/oder auf die korrespondierende Oberfläche des Absorbers vorgesehen. Der Haftvermittler kann hierbei folglich wahllos aufgetragen werden oder, was einer bevorzugten Ausführungsvariante entspricht, es wird eine definierte Reihenfolge der Auftragung des Haftvermittlers vorgesehen, jedoch ändert sich das Bild des Haftvermittlerauftrags entlang der Innenoberfläche des Fahrzeugluftreifens beziehungsweise entlang der Oberfläche des Absorbers. Die nicht mit einem Haftvermittler ausgestatteten Bereiche verfügen dementsprechend über das Trennmittel.

Als Absorber haben sich schallabsorbierende Materialien wie Schaumstoff, Glaswolle, Steinwolle, Kork, Styropor (Polystyrol), Filz, Vlies oder Schlingenware als besonders vorteilhaft erwiesen. Diese Werkstoffe lassen sich einfach verarbeiten und daher im erfindungsgemäßen Sinne problemlos einsetzen.

Als Haftvermittler kann im einfachsten Falle ein Klebstoff zum Einsatz kommen, wobei die Haftung vermittelnde Gummimischungen oder Gele ebenfalls Verwendung finden können. Ein derartiger Haftvermittler kann folglich beispielsweise ein Polyurethan-Gel sein.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: ein vollständig montiertes Fahrzeugrad im Querschnitt
und
- Figur 2:: ausschnittsweise einen Blick auf eine Innenoberfläche eines anderen Beispiels der Ausführung eines Fahrzeugluftreifens vor der Aufbringung des Absorbers.

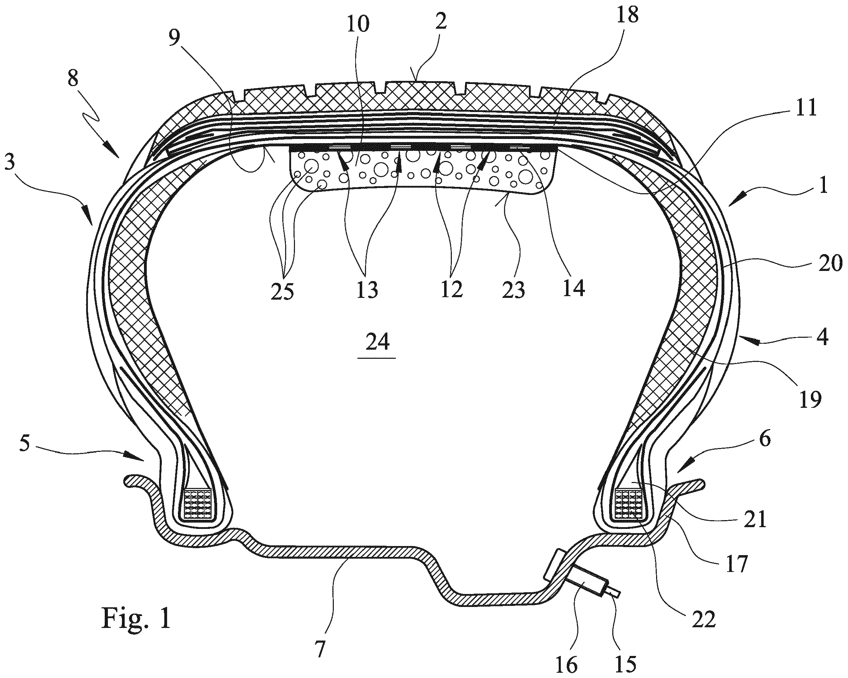

In der Figur 1 ist beispielhaft ein vollständig montiertes Fahrzeugrad 8 im Querschnitt dargestellt. Dieses setzt sich aus einem Fahrzeugluftreifen 1 und einer den Fahrzeugluftreifen 1 aufnehmenden Felge 7 zusammen. Der Fahrzeugluftreifen 1 besteht seinerseits aus einer profilierten Lauffläche 2, deren Profil in der Darstellung in Figur 1 durch mehrere, nutartige Vertiefungen lediglich angedeutet ist. Unterhalb dieser Lauffläche 2 verfügt der Fahrzeugluftreifen 1 über mehrere Gürtellagen 18, die in der Figur 1 ebenfalls nur andeutungsweise dargestellt sind. Beidseitig der Lauffläche 2 geht der Fahrzeugluftreifen 1 ferner in je eine Seitenwand 3 beziehungsweise 4 über, deren unteres Ende jeweils durch einen Reifenwulst 5 beziehungsweise 6 gebildet ist. Jeder Reifenwulst 5, 6 besteht aus einem Wulstkern 22, der in ein Kernprofil 21 übergeht, das mit einem Gummiwerkstoff ummantelt ist. Die Reifenwulste 5, 6 des Fahrzeugluftreifens 1 bilden gegenüber der Umgebung eine Dichtung, so dass diese luftdicht an einem Felgenrand 17 der Felge 7 anliegen. Der Fahrzeugluftreifen 1 und die Felge 7 umgeben dadurch gemeinsam einen Lufthohlraum 24, der über das in einen Ventilschaft 16 eingesetzte Ventil 15 des Fahrzeugrades 8 mit Druckluft befüllt wird. Die Seitenwände 3, 4 des Fahrzeugluftreifens 1 setzen sich in an sich bekannter Weise aus mehreren Lagen zusammen und bilden dadurch ein komplexes System zur Stabilisierung des Fahrzeugluftreifens 1. So ist an der Innenseite einer jeden Seitenwand 3, 4 zunächst ein Verstärkungsprofil 19 vorhanden, an das sich in Richtung Außenseite jeder Seitenwand 3, 4 eine Karkasse 20 anschließt, die ihrerseits in eine in der Figur 1 nicht näher bezeichnete Gummischicht eingebettet ist. Zudem kann die Seitenwand zusätzliche Einzellagen enthalten, auf die hier aber nicht näher eingegangen wird.

Aus der Figur 1 geht die erfindungsgemäße Besonderheit hervor, die darin besteht, dass an der der Lauffläche 2 gegenüberliegenden Innenoberfläche 9 des Fahrzeugluftreifens 1 ein Absorber 10 angeordnet ist, dessen freie Oberfläche 23 dem Lufthohlraum 24 zugewendet ist. Dieser durch das Aufschäumen eine Vielzahl in ihrer Größe sich unterscheidender Poren 25 aufweisende Absorber 10 wird unter Verwendung eines Haftvermittlers, bei dem es sich vorliegend um einen Klebstoff handelt, stoffschlüssig mit der Innenoberfläche 9 des Fahrzeugluftreifens 1 verbunden. Wie dies andeutungsweise aus der Darstellung in Figur 1 hervorgeht, weist der Haftvermittler 11 vorliegend mehrere Unterbrechungen auf und ist bei dem Beispiel in Umfangsrichtung des Fahrzeugluftreifens 1 in Linienform auf die Innenoberfläche 9 des Fahrzeugluftreifens 1 aufgebracht worden, bevor der Absorber 10 mit einer korrespondierenden Oberfläche auf die Innenoberfläche 9 aufgesetzt wird. Dadurch werden entlang der Innenoberfläche 9 des Fahrzeugluftreifens 1 mehrere, mit einem äquidistanten Abstand zueinander verlaufende Haftvermittlerabschnitte 12 ausgebildet, zwischen denen jeweils ein haftvermittlerfreier Abschnitt 13 verläuft. Jeder haftvermittlerfreie Abschnitt 13 ist dabei mit einem Trennmittel 14 versehen, so dass in diesen Abschnitten keine Möglichkeit der Anhaftung des Haftvermittlers 11 gegeben ist. Durch den Einsatz des Trennmittels 14 kann folglich der Verlauf des Haftvermittlers 11 entlang der Haftvermittlerabschnitte 12 sehr exakt definiert werden.

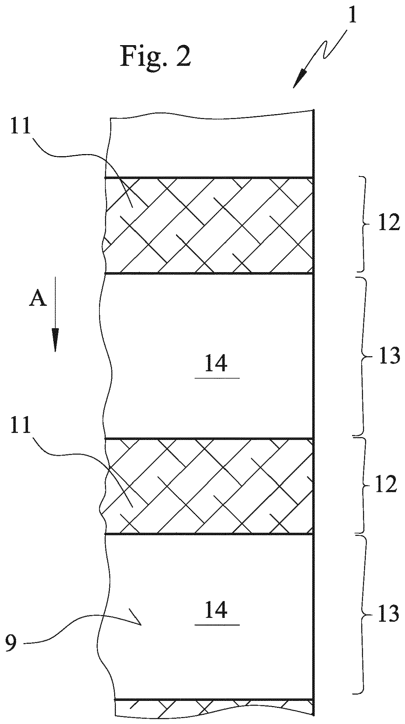

Die Figur 2 zeigt ausschnittsweise einen Blick auf die Innenoberfläche 9 eines Fahrzeugluftreifens 1, wobei die Umfangsrichtung des Fahrzeugluftreifens 1 durch den Pfeil A symbolisiert wird. Entgegen der Darstellung beziehungsweise der Beschreibung im Zusammenhang mit der Figur 1 sind bei dieser Ausführungsvariante auf die Innenoberfläche 9 des Fahrzeugluftreifens 1 mehrere Haftvermittlerabschnitte 12 in Richtung quer zur Umfangsrichtung A auf die Innenoberfläche 9 aufgebracht. Die Haftvermittlerabschnitte 12 weisen bei diesem Beispiel einen äquidistanten Abstand zueinander auf, wobei dieser Abstand jeweils durch einen haftvermittlerfreien Abschnitt 13 gebildet ist. In diesem haftvermittlerfreien Abschnitt 13 wurde zuvor ein Trennmittel 14 aufgebracht, so dass hier keine Möglichkeit für den Haftvermittler 11 besteht, eine stoffschlüssige Verbindung zwischen dem Absorber 10 und der Innenoberfläche 9 des Fahrzeugluftreifens 1 herzustellen. Als Trennmittel 14 wurde vorliegend ein Schmiermittel verwendet.

### Bezugszeichenliste:

- 1: Fahrzeugluftreifen
- 2: Lauffläche
- 3: Seitenwand
- 4: Seitenwand
- 5: Reifenwulst
- 6: Reifenwulst
- 7: Felge
- 8: Fahrzeugrad
- 9: Innenoberfläche
- 10: Absorber
- 11: Haftvermittler (Klebstoff)
- 12: Haftvermittlerabschnitt
- 13: Haftvermittlerfreier Abschnitt
- 14: Trennmittel
- 15: Ventil
- 16: Ventilschaft
- 17: Felgenrand
- 18: Gürtellagen
- 19: Verstärkungsprofil
- 20: Karkasse
- 21: Kernprofil
- 22: Wulstkern
- 23: freie Oberfläche (des Absorbers)
- 24: Lufthohlraum
- 25: Poren

## Patentansprüche

1. Fahrzeugluftreifen (1), dessen profilierte Lauffläche (2) beidseitig in Seitenwände (3, 4) übergeht, deren Ende durch einen Reifenwulst (5, 6) gebildet wird, der luftdicht in eine Felge (7) eines Fahrzeugrades (8) einsetzbar ist, wobei zur Schallabsorption ein stoffschlüssig mit der Innenoberfläche (9) des Fahrzeugluftreifens (1) verbundener Absorber (10) in den Fahrzeugluftreifen (1) integriert ist und die stoffschlüssige Verbindung aus einem zwischen dem Absorber (10) und der Innenoberfläche (9) des Fahrzeugluftreifens (1) aufgebrachten Haftvermittler (11) besteht, wobei die Innenoberfläche (9) des Fahrzeugluftreifens (1) einander abwechselnd Haftvermittlerabschnitte (12) und haftvermittlerfreie Abschnitte (13) aufweist,
**dadurch gekennzeichnet, dass**
die haftvermittlerfreien Abschnitte (13) mit einem Trennmittel (14) beschichtet sind.

2. Fahrzeugluftreifen nach Anspruch 1,
die haftvermittlerfreien Abschnitte (13) als Trennmittel (14) zwischen der Innenoberfläche (9) des Fahrzeugluftreifens (1) und dem Absorber (10) eine Folie, ein Gewebe oder einen Schmierstoff aufweisen oder daraus bestehen.

3. Fahrzeugluftreifen nach Anspruch 1 oder 2,
**dadurch gekennzeichnet, dass**
die Haftvermittlerabschnitte (12) und die haftvermittlerfreien Abschnitte (13) eine sich entlang des Umfanges der Innenoberfläche (9) des Fahrzeugluftreifens (1) gleichmäßig wiederholende Verteilung aufweisen.

4. Fahrzeugluftreifen nach Anspruch 1 oder 2,
**dadurch gekennzeichnet, dass**
die Haftvermittlerabschnitte (12) und die haftvermittlerfreien Abschnitte (13) eine sich entlang des Umfanges der Innenoberfläche (9) des Fahrzeugluftreifens (1) ungleichmäßige, sich ändernde Verteilung aufweisen.

5. Fahrzeugluftreifen nach einem der vorstehend genannten Ansprüche,
**dadurch gekennzeichnet, dass**
der Absorber aus schallabsorbierendem Material, wie Schaumstoff, Glaswolle, Steinwolle, Kork, Styropor (Polystyrol), Filz, Vlies oder Schlingenware besteht.

6. Fahrzeugluftreifen nach einem der vorstehend genannten Ansprüche,
**dadurch gekennzeichnet, dass**
der Haftvermittler (11) ein Klebstoff ist.

7. Fahrzeugluftreifen nach einem der vorstehend genannten Ansprüche,
**dadurch gekennzeichnet, dass**
der Haftvermittler (11) ein Polyurethan-Gel ist.

## Claims

1. Pneumatic vehicle tire (1) having a profiled tread (2) that merges at either side into sidewalls (3, 4), the end of which is formed by a tire bead (5, 6) insertable in an airtight manner into a wheel rim (7) of a vehicle wheel (8), wherein an absorber (10) cohesively bonded to the inner surface (9) of the pneumatic vehicle tire (1) has been integrated into the pneumatic vehicle tire (1) for sound absorption and the cohesive bond consists of an adhesion promoter (11) applied between the absorber (10) and the inner surface (9) of the pneumatic vehicle tire (1), wherein
the inner surface (9) of the pneumatic vehicle tire (1) has mutually alternating adhesion promoter sections (12) and adhesion promoter-free sections (13), **characterized in that** the adhesion promoter-free sections (13) have been coated with a separating agent (14) .

2. Pneumatic vehicle tire according to Claim 1, the adhesion promoter-free sections (13) have, as a separating agent (14) between the inner surface (9) of the pneumatic vehicle tire (1) and the absorber (10), a film, a weave or a lubricant or consist thereof.

3. Pneumatic vehicle tire according to Claim 1 or 2,
**characterized in that**
the adhesion promoter sections (12) and the adhesion promoter-free sections (13) have a homogeneously repeating distribution around the circumference of the inner surface (9) of the pneumatic vehicle tire (1).

4. Pneumatic vehicle tire according to Claim 1 or 2,
**characterized in that**
the adhesion promoter sections (12) and the adhesion promoter-free sections (13) have an inhomogeneous, varying distribution around the circumference of the inner surface (9) of the pneumatic vehicle tire (1).

5. Pneumatic vehicle tire according to one of the preceding claims,
**characterized in that**
the absorber consists of sound-absorbing material, such as foam, glass wool, rock wool, cork, Styropor (polystyrene), felt, nonwoven fabric or loop pile fabric.

6. Pneumatic vehicle tire according to one of the preceding claims,
**characterized in that**
the adhesion promoter (11) is an adhesive.

7. Pneumatic vehicle tire according to one of the preceding claims,
**characterized in that**
the adhesion promoter (11) is a polyurethane gel.

## Revendications

1. Pneu de véhicule (1), dont la bande de roulement profilée (2) se transforme des deux côtés en flancs (3, 4) dont l'extrémité est formée par un bourrelet (5, 6) pouvant être introduit de manière étanche à l'air dans une jante (7) d'une roue de véhicule (8), un absorbeur (10) relié par accouplement de matières avec la surface intérieure (9) du pneu de véhicule (1) étant intégré dans le pneu de véhicule (1) pour l'absorption acoustique, et la liaison par accouplement de matières étant constituée par un promoteur d'adhésion (11) appliqué entre l'absorbeur (10) et la surface intérieure (9) du pneu de véhicule (1), la surface intérieure (9) du pneu de véhicule (1) présentant en alternance des sections munies de promoteur d'adhésion (12) et des sections exemptes de promoteur d'adhésion (13), **caractérisé en ce que**
les sections exemptes de promoteur d'adhésion (13) sont revêtues d'un agent de séparation (14).

2. Pneu de véhicule selon la revendication 1, les sections exemptes de promoteur d'adhésion (13) comprennent en tant qu'agent de séparation (14) entre la surface intérieure (9) du pneu de véhicule (1) et l'absorbeur (10) un film, un tissu ou un lubrifiant, ou en sont constituées.

3. Pneu de véhicule selon la revendication 1 ou 2, **caractérisé en ce que** les sections munies de promoteur d'adhésion (12) et les sections exemptes de promoteur d'adhésion (13) présentent une distribution répétée de manière uniforme le long de la périphérie de la surface intérieure (9) du pneu de véhicule (1).

4. Pneu de véhicule selon la revendication 1 ou 2, **caractérisé en ce que** les sections munies de promoteur d'adhésion (12) et les sections exemptes de promoteur d'adhésion (13) présentent une distribution variable, non uniforme, le long de la périphérie de la surface intérieure (9) du pneu de véhicule (1).

5. Pneu de véhicule selon l'une quelconque des revendications précédentes, **caractérisé en ce que** l'absorbeur est constitué par un matériau absorbant acoustique, tel qu'une mousse, de la laine de verre, de la laine de roche, du liège, du Styropor (polystyrène), du feutre, un non-tissé ou un tissu bouclé.

6. Pneu de véhicule selon l'une quelconque des revendications précédentes, **caractérisé en ce que** le promoteur d'adhésion (11) est un adhésif.

7. Pneu de véhicule selon l'une quelconque des revendications précédentes, **caractérisé en ce que** le promoteur d'adhésion (11) est un gel de polyuréthane.
